(19) Europäisches Patentamt

European Patent Office

Office européen des brevets

(11) **EP 1 718 089 A1**

(12) **EUROPEAN PATENT APPLICATION**

(43) Date of publication:
**02.11.2006 Bulletin 2006/44**

(51) Int Cl.:
*H04Q 7/34* (2006.01)

(21) Application number: **05425266.3**

(22) Date of filing: **29.04.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(71) Applicant: **Siemens S.p.A.**
**20126 Milano (IT)**

(72) Inventors:
- **Minelli, Lorenzo**
  **20151 Milan (IT)**
- **Palagiano, Leandro Luigi Maria**
  **20093 Cologno Monzese (IT)**

(74) Representative: **Giustini, Delio**
**Siemens Mobile Communications S.p.A.**
**Postfach 22 16 34**
**80506 München (DE)**

(54) **A method of analysing load-dependent operational parameters in a cellular communication network, related system and computer program product**

(57) The effect of traffic load on at least one operational parameter in a cellular communication network (1, 10, 12, 20) is evaluated dynamically (i.e. simulated) by:
- recording at least one further operational parameter of the network (1, 10, 12, 20), wherein the further operational parameter varies with the traffic load, and the at least one operational parameter is a function of the further operational parameter,
- providing an evaluation of the behaviour of the at least one operational parameter as a function of the variation caused by the traffic load in the further operational parameter.

The evaluation function is adjusted by correlating the values of:
- a) the at least one operational parameter as measured at a given instant or period of time in the presence of a given traffic load in the network (1, 10, 12, 20), and
- b) the further operational parameter as recorded (100) at the same given instant or period of time and traffic load conditions of the network (1, 10, 12, 20).

Based on this simulation, proper optimisation countermeasure(s) can be defined as a consequence of the analysis of the composition of the operational parameter whose behaviour has been simulated, while ensuring consistency with the actual value(s) as measured at a given time and for a given traffic load.

Fig. 1

EP 1 718 089 A1

## Description

Field of the invention

The invention relates to a cellular communication networks.

The invention was devised with specific attention paid to analysing operational parameter behaviour in cellular communication networks of the UMTS type. The invention is however applicable, in general terms, to analysing the behaviour of load-dependent operational parameters in any type of cellular communication networks.

Description of the related art

In cellular communication networks operating based on a CDMA (Code Division Multiple Access) scheme such as UMTS cellular communication networks, the coverage in terms of field strength and interference is continuously affected by the traffic load generated by each cell.

Developing a picture (a geo-referenced map) of the coverage quality related to the traffic load and finding critical areas exposed to the risk of being excluded from service by Radio Frequency signals transmitted by another overloaded or interfering cell, is thus of high concern for network operators.

Specifically, in a UMTS-FDD (FDD being an acronym for Frequency Division Duplex) cellular communication system each user connected to a radio base station transmits a certain amount of uplink power and receives a variable level of downlink signal. These are both necessary to ensure correct operation, but at the same time (due to the the fact that uplink and downlink codes related to different cells are non-orthogonal) they in fact represent uplink and downlink interference for all other on-going connections in the same area.

The Received Signal Strength Indicator (RSSI) value has a significant impact on network performance. In fact, if the RSSI changes (both uplink and / or downlink) a corresponding re-adjustment of the power required (both uplink and / or downlink) is necessary. The interference level has a strong impact also on the ratio defined as $E_c/I_o$; this is namely the ratio of the average received energy per PN chip for different fields or physical channels to the total received power spectral density. Specifically, such a ratio, as related to the so-called pilot channel P-CPICH, is used as a reference by most of the algorithms that ensure proper operation of an UMTS-FDD network.

Practical experience shows that lowering values for the ratio in question, as related to the P-CPICH channel, gives rise to access failures and call drops. These are among the most significant operational parameters, related to the quality of service (QoS), as perceived by the user of a cellular network.

The interference level in an UMTS-FDD network depends on the current actual traffic conditions and may therefore vary instantaneously. Any measurement of that parameter, (or any other load-sensitive operational parameter of the network) that can be related to the radio coverage geographical map and to a known traffic load, represents a sort of instantaneous picture of the coverage efficiency situation at a given time and at a known traffic load. At present, the amount of information that can be detected "in the field" by using standard instrumentation is relatively small. Consequently, such a measurement of the interference level does not permit to identify all the components of interference, or make predictions or assessments of the performance of the radio coverage and of the system network at different times and different load conditions but those existing when the measurement was taken.

Object and summary of the invention

In view of the foregoing, the need is felt for an arrangement which may permit e.g. to evaluate the interference conditions and their evolution related to traffic load in an UMTS-FDD network, without taking an extensive amount of measurements throughout the coverage area of the network and throughout the day (in order to take samples related to different (time dependent) load conditions and different geographic positions).

The object of the invention is to provide a satisfactory response to such a need.

According to the present invention, that object is achieved by means of a method having the features set forth in the claims that follow. The invention also relates to a corresponding system and to a computer program product directly loadable in the memory of at least one computer and including software code portions for performing the steps of the method of the invention when the product is run on a computer. As used herein, reference to such computer program product is intended to be equivalent to refer to a computer-readable medium containing instructions for controlling a computer system to coordinate the execution of the method of the invention. To make reference to "at least one computer" is obviously intended to highlight the possibility for the present invention to be implemented in a distributed/modular fashion.

The claims are an integral part of the disclosure of the invention provided herein.

A preferred embodiment of the invention permits to simulate, based on measurements taken at a given instant of time and at given places, the variation of e.g. the interference level in an UMTS-FDD network due to the variations of the traffic supported by the network over time.

Specifically, the arrangement described herein makes it possible to correlate in-field measurements together with the traffic describing data (for each cell in the network) recorded at the same time interval

On the basis of this correlation, the possibility is exploited of estimating, for places where measurements have been done, the behaviour (i.e. the evolution over time) of the radio coverage conditions due to changes in traffic load. Critical areas can thus be outlined and analysed in order to define proper countermeasures. The same approach can be adopted in simulating the effect of procedures enacted in order to improve the quality of the service.

The arrangement described herein makes it possible to analyse the behaviour of a cellular communication network, such as a UMTS network, blowing up (focusing) to cell service area detail in the presence of real and/or simulated traffic load while identifying the most relevant bearers. The analysis can be extended to the variations for different traffic load conditions of the Ec/Io ratio, thus making it possible to identify conditions, and related areas, where (as a result of the UMTS radio signal being interfered beyond decoding possibility) the users terminal may attempt to select different network (for instance a 2G system) in order to obtain proper service.

Brief description of the annexed drawings

The invention will now be described, by way of example only, with reference to the enclosed figures of drawing, wherein:

- figure 1 is a functional diagram exemplary of criteria of application of the method described herein to a cellular communication network, and
- figure 2 is a flow-chart exemplary of the method described herein.

**Detailed description of preferred embodiments of the invention**

A glossary is reproduced below providing explanations of certain terms of common usage in the art to which the invention relates.

*Glossary*

| Optimisation (of a network) | A process of data analysis and definition of actions to be carried out in order to modify a network and its components with the aim of enhancing network performance and achieve target values (or at least to get the values closest thereto) pursued in the network design. |
| --- | --- |
| Target value (of a parameter or variable) | The value of the parameter or variable defined as the purpose of the project. |
| Operational parameter | A variable measuring some event (or physical entity) able to represent an aspect of the operation of a system, or physical network, or some elements constituting each other or both. |
| Configuration parameter | A variable measuring and defining some condition or conditioning some network element operation so that the system (or network) behavior is affected by the value of the parameter itself |
| UMTS | Universal Mobile Telecommunications System |
| Digital or Digitised Territory Map | A geographical map represented by means of numerical values that can be processed via a computer (and proper software) so that the information contained therein can be used for whatever aim. |
| Service Area | In the mobile communication technical jargon, this term is normally used to indicate a geographical area in which voice or data communication can be set up and at least one of the serviced user involved is a mobile one. The Service Area can be related to more or just only one Radio Base Station |
| Radio Base | In the mobile communication technical |

(continued)

| Station | jargon this term is normally used to indicate at least a set of radio transmitting and recei ving equipment, and a geographical place where this equipment is located, if the purpose of the equipment is to support a radio link connection with one or more mobile users. |
|---|---|
| Service sub-Area | A fraction of the service area in which one or more parameters describing the Area or service attributes or parameters can be considered by assuming an average value without having to take into account all the different values these parameters can have in different places within the same sub-area. |

| Granularity ( of the representation) or Map Resolution | This term indicates the dimension of the sub-area in respect of the dimension of the whole Area considered, or the portion of time to which the data to be analysed are referred in respect of the whole amount of time for which analysis of data is to be performed. In general, "granularity" is a concept which refers to the minimum entity in which is worth (or possible) to split the entity under analysis |
|---|---|
| Computer program | A set of conventional expressions (words or numeric values expressed in alphabetic or digital coding) adapted to be processed by a computer machine in order to perform logical or mathematical operations on other information called "input data" and produce results expressed in words or numeric values called "output data" |
| Software tool | A computer program aimed at processing some specific kind of data in order to produce results consequent to mathematical and/or logical rules defined in the program itself. The purpose of a software tool is to automatically execute repetitive operations that can be done by human beings but would demand a "non creative" and expensive effort. |
| Cellular communication network | A set of equipment, generally distributed over a geographical region, by means of which mobile users can activate a radio connection so that a phone call or a data call can be set up using a radio transceiver (called hand held or user terminal) normally carried by the user. "Cellular" means that the "Network" may be composed by several more or less overlapping service Areas in order to ensure the continuity of the service all over some geographical area. |
| Method | A rule or a set of rules describing and defining an activity |
| Network performance | An effect or a set of effect that can be measured in order to describe the behaviour of the network (that is the results or events produced by stimulating the network with some other events). Network design and implementation is generally aimed at obtaining well defined values (target values) for some performance of the network (Radio signal minimum level within the service area, probability to get service, probability to lose service, probability to maintain the radio connection for a certain time or moving along a certain distance, and other events) |

(continued)

| | |
|---|---|
| Antenna orientation | The direction in which the maximum signal strength can be received at a defined distance from the antenna; normally the orientation is defined by an angle value, lying in the horizontal plane, measured from geographically referenced direction. |
| Antenna Tilt | The angle (lying in the vertical plane) defining the difference between the horizontal reference line and the effective direction pointed by the antenna (that is that of the maximum power radiated). |
| Radio signal strength | The power level (or voltage level) that can be measured and indicated by a radio receiver able to receive the wanted (and measure only the wanted) radio signal. |
| Weighted averaging | A mathematical operation by which different values for one or more variables are put in a mathematical expression in which each value is multiplied by a coefficient which takes into account some other effects due to the real situation and to some environmental conditions. |
| In field measurement | A measurement of one or more physical entities or events carried out by means of physical instruments directly on network elements or/and in places where effects of the network, as actually deployed, can be stimulated and/or measured. |
| Network Tuning | The activity performed by defining actions and modifying network entities and parameters in order to change (improve) the network behaviour measured by one or more operational parameters. |
| Network / Service / access quality | Quality is a word indicating how much the perceived or measured value of an event or of a sequence of events is close to the expected value. In most cases related to telecommunication networks, Quality is measured by the probability that something wanted happens or that something not wanted do not happen. The quality is better inasmuch as the probability that a wanted event happens is higher and, at the same time, the probability for an unwanted event to occur is lower. |
| RSCP | Received Signal Code Power |
| RSSI | Received Signal Strength Indicator |
| C-PICH | Radio frequency signal emitted by each RBS in order to inform mobile equipments about its availability and characteristics relevant to the how to set up and maintain a possible radio connection. |
| Ec / Io | Signal over interference (wide band) power ratio |
| Cell selection and re-selection | A procedure defined by rules by which a mobile radio unit is enabled to recognise by which RBS the service can be supported at best conditions |
| handover | A procedure by which a radio connection is supported by different RBS in subsequent time intervals. |

(continued)

| | |
|---|---|
| Soft -handover | A procedure by which the same radio connection can be supported at the same time by several RBS the best one of which is selected instant by instant in order to give continuity to the service (the ongoing call) |
| Inter frequency handover | A Procedure by which handover is performed involving two transceivers using two different radio frequencies and pertains to the same or to two different RBS. |
| Inter System handover | An handover performed between two RBS pertaining to two different systems (E.G. : UMTS to GSM or GSM to UMTS ) |
| Interference (radio) | Interference is an effect created within a receiver due to the reception of at least two signals: the first one being the "wanted" signal and the other one is the "unexpected" signal. By the nature of the receiver, if the power difference between the received signals has a value within a certain range, the receiver may show difficulty in recognizing and reproducing the "wanted" signal. This has as a consequence the introduction of some wrong information in the receiver output signal. The effect is strongly dependent from the difference in power between the received wanted signal and the power cumulated by all the received but "not wanted" signals (among the others there are the Thermal noise and the man made RF noise) |
| Critical area | A critical area is an area in which one or more target values related to operational parameters are not measured or assured |
| Receiver dynamics | Receiver dynamics is the range of power values by which the correct reconstruction, in the base band, of the received signal is performed. |
| Call drop | Is the event described as the loss of the radio connection and of the continuity of service |
| Access failure | Is the event described as the unsuccessful outcome of an attempt done by a user in order to establish a radio connection |
| Traffic Load | A wording normally used in telecommunication jargon to mean the amount of resources (of certain physical or logical type as e.g. RF bandwidth, switched circuits, logical circuits.) , engaged in order to support communication links among the users of the communication network. Traffic load is an index of the total amount of network resources engaged in a certain instant of time. |
| Coverage quality | A wording indicating how much the performance of the radio coverage (such as e. g. the signal field strength and its distribution over the considered area), correspond to values defined as "target values" for the design of the radio access network |
| UMTS-FDD | A definition corresponding to a Telecommunication System using a variable broad band in order to give communication service to mobile users and characterised by the fact that two different radio frequencies are used for the uplink and downlink connections (Frequency Division Duplex. |

(continued)

| Statistic Counter | A counter generally managed by one or more network element by which specific events occurring in the network are counted along a certain period of time. An event can be for instance the engagement of a network resource as well as its disengagement; events may also be time units (e.g.: seconds) elapsing since a specific event or action is started or terminated. Traffic related information are used in order to record some kind of "story" of the operational parameters value evolution during the day |
|---|---|
| Reference Time Frame | Whatever period of time in which operational parameters values are measured and recorded in order to define a reference set of values to be used in order to compare same parameters value recorded in other time frame, analyse differences, recognise the causes, and describe a model of the network behaviour. |
| External source | As used herein, "external source" indicates whatever source of RF signal, or RF noise power, which is not an active part of the Network under examination. |
| SIB | System Information Broadcast: a coded information related to network operation and configuration parameter values transmitted on a signalling channel in order to make mobile terminals "aware" of some network working characteristics. |
| Best Server (Cell) | Given a defined geographical area, the "best Server" cell (or Radio Base Station) for this area is the one which has the most powerful RF signal in the area. The geographical area representation should be done normally through a map with a resolution or "granularity" by which in each sub area point just one best server can be measured; if not it is assumed normally that the best server is the radio base station best received in the majority of the sub-area points. |
| SIR | The Signal-to-Interference Ratio measured for a specific bearer (traffic channel, characterised by coding scheme and bandwidth, configured for specific service). |

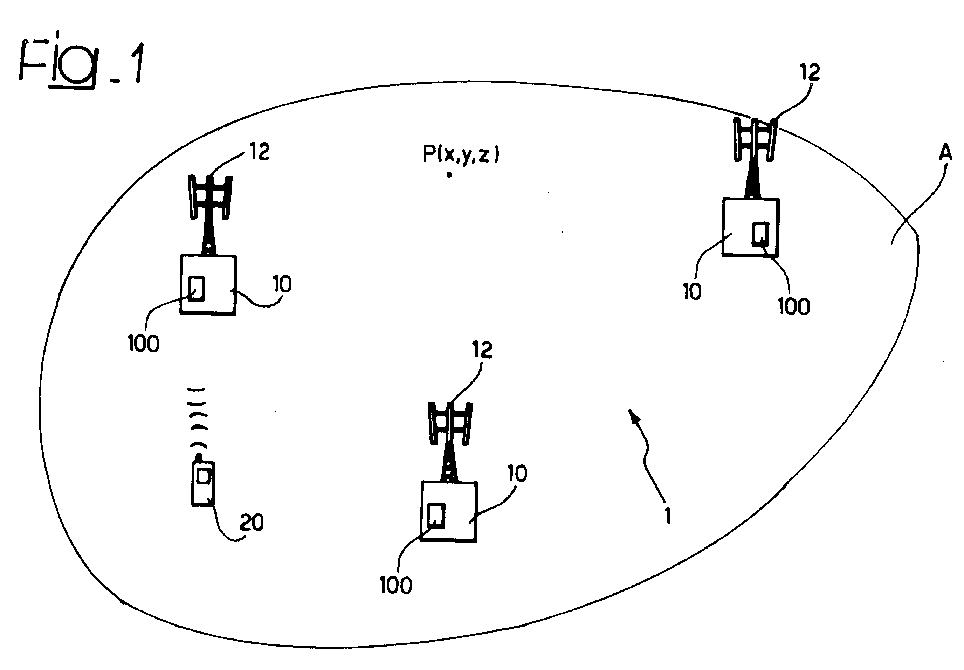

In figure 1, reference 1 indicates as a whole a cellular communication network, such as e.g. UMTS communication network.

The network in question includes a plurality of radio base stations 10 provided with respective antenna assemblies 12 intended to provide the cellular coverage of a served area A wherein the users' mobile terminals 20 are located.

A generic point P in the served area A will be denoted by geographic coordinates x, y and z, z being an altitude coordinate.

A network as shown in figure 1 is generally characterized by a number of "configuration parameters" that essentially identify the network 1 "how it is", in terms of e.g. number and location of the base stations 10, the antenna types equipping those stations, the antenna height, antenna downtilt, antenna azimuth, transmission power of the pilot channel (P-CPICH), the power associated with all the other control channels, and so on.

While some of these configuration parameters will be specifically dealt with within the framework of the detailed description provided herein, the present invention is in no way related to the specific choice of any of those configuration parameters.

Similarly, a network as schematically represented in figure 1 will be identified by a number of "operational parameters", having values that generally vary, for each specific point P (x, y, z) of the served area A, due to a wide variety of factors that rule the interaction of the network equipment with mobiles terminals in the territory served.

Again, the present invention is in no way related to the specific choice of any of those "operational parameters".

Specifically, the invention deals with the problem of providing a reliable evaluation (i.e. simulation) of the behaviour (that is: value changes over time), caused by traffic load changes over time, of any such operational parameter (whatever this parameter may be). In general, the value(s) of the parameter(s) in question will be assumed to be affected by the traffic conditions in the network and thus likely to vary (also quite rapidly) over time as a function of changes of traffic load conditions in the network over time.

The reference 100 appearing in figure 1 denotes so-called "Traffic related information" generally originated or collected in each radio base station 10 (RNC/Node B). As it is well known, that information is typically recorded by means of counters ("statistic counters") that record through the day at least the values of the downlink RF power emitted by each cell (namely by each radio base station 10) over each UMTS-FDD carrier (globally or separately for each bearer) as well as the uplink interference level.

Typically, such traffic related information 100 is physically located with each respective radio base station 10. However, this is not a mandatory requirement inasmuch as e.g. the data concerning the downlink emitted power and the uplink interference can in fact be produced, recorded and stored also at locations different from the locations of the various radio base stations.

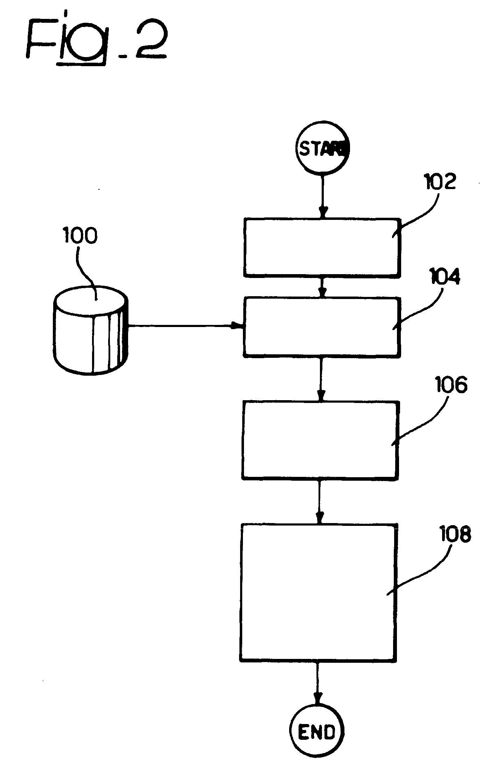

In the flow-chart of figure 2, after a start phase, a step 102 is representative of an in-the-field measurement campaign carried out over a set of points P (x, y, z) of the area A served by the cellular network 1.

Such a measurement campaign is adapted to be carried out by known means, for instance by using a scanner device that is caused to travel and get measurements within the area A. Such scanner devices have associated therewith (or are configured for interfacing) equipment for processing the data collected by the scanner. These scanner devices are well known in the art and are currently used by most major operators of mobile communication systems, thus making it unnecessary to provide a more detailed description herein.

The measuring campaign in question is preferably carried out at a time where the network is subjected to a reduced (in order to minimize the interference effect) and measurable traffic load, and aims at collecting for a defined set of points (sub-area) of relevant interest in the area A (for a measurable traffic load condition of the network 1) the measured values of at least one "operational parameter" of the network 1.

Those of skill in the art will promptly appreciate that the arrangement described herein does in no way focus on the choice of any specific operational parameters, while it will be generally assumed in the following, that the operational parameter(s) measured can be expressed as a function of the traffic-related parameters that can be related to or represented by the traffic related information 100.

In a step 104, the value(s) of the parameter(s) as measured in a given time interval (for instance 7.30 to 7.45 a.m.) during the step 102 are correlated (i.e. essentially checked for consistency, as better detailed in the following) with the values of the parameters (downlink power emitted for each cell over a given carrier and uplink interference level) reported in the traffic related information 100, referred to (or recorded in) the same time interval, coming out from the radio base stations 10. This correlation aims at defining a reference situation in which known traffic information corresponds to known radio operational parameter values.

The operational parameter(s), whose values are measured during the step 102, may then be evaluated (i.e. simulated) dynamically in their behaviour over time and related traffic load changes -- i.e. during the rest for the day -- as a function of the operational parameter(s) whose behaviour over time and related traffic load changes is calculated using traffic related information usually different from those used at step 100.

Specifically, once properly adjusted on the basis of the operational parameter values (e.g. RSSI as Type "A") measured in-the-field (at a given time of day and with reference to a measured load conditions of the network), such an algorithm (model) can be used in the step 106 to calculate the evolution of the operational "type "A" parameters as a function of the varying traffic load conditions, for instance using those data stored in the traffic related information 100 whose value evolution over the day is, possibly, recorded,.

This occurs in a step 106, where the evolution over time (e.g. over a whole day) of the operational parameter(s) (e.g. RSSI) measured during the step 102 is simulated - i.e. evaluated algorithmically, without performing new measurement campaigns - as a function of the data derived from the traffic related information 100 referred to an equivalent time interval.

Such a simulation can be carried out with the same minimum time resolution or level of granularity (i.e. time intervals length) for which the relevant traffic related information is recorded, stored or calculated in 100.

For instance, the parameter value estimated/simulated in step 106 can be the interference level of a given pilot channel P-CPICH, and the composition of the RSSI indicator, associated therewith, can be analysed.

A subsequent step 108 in the process described can be devoted to a number of processing activities such as:

- identifying critical areas within the served area A from the view point of interference,
- identifying countermeasures to minimize such negative effects,
- analysing over-powered conditions by calculating the minimum link budget (also on the basis of the Traffic related information),
- identifying corresponding critical areas, and
- identifying proper countermeasures.

The processing step, generally identified by the block 108 in figure 2, is performed using methods that are known in the art. This additional processing does not represent specific subject-matter of this application, which makes it unnecessary to provide a more detailed description herein.

Upon completion of the processing steps summarised by the block 108, the method evolves to a final step designated the STOP in figure 2.

In the following one exemplary method will be presented for re-calculating (i.e. simulating) the behaviour over time of the parameter RSSI: again it is stressed that this is just one example of the operational parameters of the network 1 that can be simulated based on the arrangement described herein).

Specifically, simulation of the downlink RSSI indicator starting from the measurements collected in the field in the step 102 and from the contents of the Traffic related information 100 will be exemplified.

Within the 5 MHz of an UMTS-FDD carrier, the Received Signal Strength Indicator (RSSI) at a given point P (x, y, z) within the area served A can be generally expressed as the sum of the power received from each cell plus the contribution of thermal noise and possible external sources of interference, namely:

$$RSSI = N_0 + \sum_1^N \Pr x_i + Interf_{ext}$$

where N represents the number of cells whose radio frequency signal is present at a given point (geographical place).

Specifically, No represents the thermal noise power, while $Interf_{ext}$ represents the power contribution of the external sources of interference. The total amount of noise + interference power at this place is the sum of the power received (transmitted minus path loss) from each cell ($Prx_i$ where i= 1,..., N represents the contribution of a generic cell, N being the number of cells present at a given point P (x, y, z).

By assuming that the interference coming from outside the UMTS system (that is from "external" sources), and all the cells considered (usable by the mobile terminal) are those decoded correctly by the measurement instruments used in-the-field during the step 102, the following expression applies:

$$RSSI = N_0 + \sum_1^N PTx_i \times Pathloss_i$$

where:

- N is the number of the cells decoded at a given point and at a given moment by the measurement instrument,
- $Ptx_i$ is the total power transmitted by the i-th cell at a given time instant (corresponding to the time in which the instrument has decoded the same signal or at list to the same, granularity long, time frame), and
- $Pathloss_i$ is the downlink path loss (indirectly) measured between the I-th cell and the point P (x, y, z) considered.

The path loss between a given cell (or, more precisely, the radio bases equipment that irradiates the radio power for a given cell or cell portion) and a given point, can be exactly calculated by using the Received Signal Code Power (RSCP) level of the pilot channel P-CPICH. This is transmitted with a constant power at a given level that is well known (transmitted on the SIB (System Information Block on P-CCPCH)

Specifically, the following relationship applies:

$$Pathloss_i = Ptx_{CPICHi} - \Pr x_{PCPICHi}$$

where:

- $Ptx_{CPICHi}$ is the power transmitted on the P-CPICH channel of the i-th cell, and
- $Prx_{CPICHi}$ is the power received on the P-CPICH channel of the i-th cell at a given point P (x, y, z).

By referring to the equations defined in the foregoing, the measurement campaign of the steps 102 makes it possible to determine exactly the value for the path loss for each point P(x, y, z) covered during the campaign. This ("correlation") step is based on actual measured values and is in no way affected by any other factor that is not represented in the algorithmic model considered.

Based on the same equations defined in the foregoing (properly adjusted by correlation with the actual operational "type B" parameters), and the values represented by the traffic related information relevant to the reference time frame), the value of the interference level RSSI can be re-calculated for any time frame and for each geographical point on the basis of the data stored, recorded or calculated in 100.

In the exemplary instance considered here, these data include the values of the power transmitted from each cell over a given UMTS-FDD carrier, and record the variation thereof at different time instants (which resolution in time (duration) is as long as the "granularity" period); defining the "granularity" of the data stored, recorded or calculated in 100 the minimum length of time interval for which it is possible or makes sense to represent traffic load as a value in average constant in time.

Similarly, the ratio Ec/Io for the i-th cell can be expressed as follows:

$$\frac{Ec}{Io}i = \frac{RSCP_i}{RSSI}$$

where RSCP is the RSCP value received from the i-th cell at a given point P (x, y, z).

Consequently, the value for Ec/Io can be re-calculated (i.e. simulated) at each point and for each instant of the granularity in respect of each cell considered.

Based on this information, "critical" areas can be identified. These areas may become critical since they reach, as a consequence of the traffic load, critical values of the Ec/Io ratio related to the "best server" cell, thus impairing the network performance as regard probability of access (to get service) and call (radio connection) drops.

Once those critical zones are identified, the "composition" of the RSSI indicator can be analysed in order to identify the most relevant sources of interference.

Essentially, two different scenarios may apply for a given point:

- the prevailing contribution to the RSSI indicator is given by the best server cell (it must be noted that on a single carrier a number, increasing with traffic load, of differently coded channels are transmitted and all channels, that are not the one used by the user terminal, give a contribution to the total interfering power), or
- the prevailing contribution to the RSSI is not provided by the best server cell.

In the former case, the traffic carried by the server cell is so high as to create a high interference level. Consequently, in order to cope with the critical situation related to an excessive value for the RSSI indicator, the following courses of action can be resorted to:

- reducing the traffic level supported by the server cell on the measured frequency (UMTS carrier) by adding a new UMTS carrier,
- reducing the traffic level supported by the server cell, by re-distributing the respective load on the neighbouring cells by modifying (narrowing) the radio coverage extension and/or changing the re-selection and soft-handover parameter values; or
- reducing the traffic load carried by the server cell by relocating a part of the traffic in excess on a second generation network (if available).

In the latter case considered above, the high interference value is primarily due to the presence of the signals from several cells other than the "best server" one. Consequently, the best action to be taken is optimising the coverage of the UMTS network, by re-defining the areas covered by the individual cells narrowing the overlapping zones.

Another analysis step, which can be taken within the framework of the arrangement described herein, is analysing the network by considering the minimum link budget for accessing the network. In fact, even if the Ec/Io ratio for the best server cell is not under a critical threshold, it may happen that some of the requested services cannot be provided in all the areas throughout the network. In fact, the combination of per se non-critical path loss and non-optimal interference conditions, may lead to a situation in which the maximum power available from the mobile terminal, or the radio station, is insufficient to comply the minimum link budget requirement.

In practice, for each point subject to measurement during the campaign of step 102, and for which the interference level has been re-calculated as explained in the foregoing, the possibility exist of calculating the minimum link budget that can be used by a given (hypothetic) user by resorting to the following relationships:

$$- \texttt{downlink:} \quad P\max DCH_{beareri} \geq Pathloss_i + \frac{Ec}{Io} + SIRinit_{beareri}$$

$$- \texttt{uplink:} \quad P\max DCH_{beareri} \geq Pathloss_i + UL_{int\,erference} + SIRinit_{beareri}$$

where

- Pmax $DCH_{beareri}$ is the maximum power that can be transmitted in the uplink and downlink directions, respectively, on the dedicated channels;
- $Pathloss_i$ is the pathloss calculated between the point P (x, y, z) considered and the i-cell;
- ULinterference is the uplink interference measured for the i-th cell (for instance via the Traffic related information 100 at a given instant; and
- $SIRinit_{beareri}$, is the initial SIR target (Signal-to-Interference Ratio) related to the i-$TH_{bearer}$.

Those areas wherein at least one of the link budgets concerning different bearers is not satisfied shall be regarded as "critical areas" and will be analysed in detail. In these cases, the path loss interference characteristics will be analysed in regard of the relative weight by adopting different countermeasures similar to those already described in the foregoing but making reference to downlink interference.

Without prejudice to the underlying principle of the invention, the details and the embodiments may vary, even appreciably, with respect to what has been described by way of example, without departing from the scope of the invention as defined by the annexed claims.

**Claims**

1. A method for dynamically evaluating the effect of traffic load on at least one operational parameter in a cellular communication network (1, 10, 12, 20), wherein said at least one operational parameter varies with the traffic load of said network, the method including the steps of:

- recording (100) at least one further operational parameter of said network (1, 10, 12, 20), wherein said at least one further operational parameter varies with said traffic load, and said at least one operational parameter is a function of said at least one further operational parameter,
- providing an evaluation (106) of the behaviour of said at least one operational parameter as a function of the variation caused by the traffic load in said at least one further operational parameter, wherein the evaluation function (106) is adjusted by correlating the values of:

- a) said at least one operational parameter as measured (102) at a given instant or period of time in the presence of a traffic load of said network (1, 10, 12, 20) at said given instant or period of time, and
- b) said at least one further operational parameter as recorded (100) at said given instant or period of time and said traffic load of said network (1, 10, 12, 20) at said given instant or period of time.

2. The method of claim 1, **characterized in that** said evaluation function (106) is adjusted by calculating it on the basis of the analysis and composition of all the effects affecting said at least one operational parameter as measured (102) at a given instant or period of time in the presence of a traffic load of said network (1, 10, 12, 20) at said given instant or period of time.

3. The method of either of claims 1 or 2, **characterized in that** it includes the step of selecting said at least one operational parameter out of:

- the Received Signal Level (RSSI), and
- the Ec/Io ratio for at least one point (P(x, y, z)) of the area served (A) by said network (1, 10, 12, 20).

4. The method of any of claims 1 to 3, **characterized in that** it includes the step of selecting said at least one further operational parameter out of:

- the downlink power ($Ptx_i$) emitted for a given carrier by each cell in said network (1, 10, 12, 20); and
- the uplink interference level ($Prx_i$).

**5.** The method of any of the previous claims, **characterized in that** it includes the step of selecting said given instant or period of time as an instant or period of low traffic conditions of said network (1, 10, 12, 20).

**6.** The method of any of the previous claims, **characterised in that** it includes the step of selecting said at least one further operational parameter (e.g. $Ptx_i$; $Prx_i$) out of operational parameters of said network (1, 10, 12, 20) recorded (100) and related to one or more radio base stations (10) of said cellular network.

**7.** A system for dynamically evaluating the effect of traffic load on at least one operational parameter in a cellular communication network (1, 10, 12, 20), wherein said at least one operational parameter varies with the traffic load of said network, the system including:

- memory facilities (100) for recording at least one further operational parameter of said network (1, 10, 12, 20), wherein said at least one further operational parameter varies with said traffic load, and said at least one operational parameter is a function of said at least one further operational parameter,
- a scanner device for measuring (102) said at least one operational parameter at a given instant or period of time in the presence of a traffic load of said network (1, 10, 12, 20) at said given instant or period of time, and
- a processing unit configured for performing the steps of the method of any of claims 1 to 6.

**8.** A computer program product, loadable in the memory of at least one computer and including software code portions for implementing the method of any of claims 1 to 6.

Fig.1

# Fig.2

European Patent
Office

**EUROPEAN SEARCH REPORT**

Application Number

EP 05 42 5266

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 141 565 A (FEUERSTEIN ET AL) 31 October 2000 (2000-10-31) * column 2, line 60 - column 4, line 20 * * column 8, line 11 - line 27 * * column 9, line 35 - line 59 * * column 11, line 50 - column 12, line 36 * * abstract; claims 1,5-8,14-16,18; figure 3 * ----- | 1-8 | H04Q7/34 |
| A | US 6 192 243 B1 (YANG PING ET AL) 20 February 2001 (2001-02-20) * column 2, line 57 - column 3, line 10 * * abstract * ----- | 1-8 | |
| A | US 6 246 880 B1 (IIZUKA NORIO) 12 June 2001 (2001-06-12) * abstract; figures 5,8 * ----- | 1,7 | |
| A | EP 1 317 158 A (MITSUBISHI ELECTRIC INFORMATION TECHNOLOGY CENTRE EUROPE B.V) 4 June 2003 (2003-06-04) * the whole document * ----- | 1-8 | **TECHNICAL FIELDS SEARCHED** (Int.Cl.7) H04Q |

The present search report has been drawn up for all claims

| Place of search | Date of completion of the search | Examiner |
|---|---|---|
| The Hague | 27 September 2005 | Coppieters, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 42 5266

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2005

| Patent document cited in search report | | Publication date | Patent family member(s) | | Publication date |
|---|---|---|---|---|---|
| US 6141565 | A | 31-10-2000 | NONE | | |
| US 6192243 | B1 | 20-02-2001 | AU | 8138198 A | 08-12-1998 |
| | | | CA | 2292446 A1 | 19-11-1998 |
| | | | EP | 0981922 A2 | 01-03-2000 |
| | | | WO | 9852366 A2 | 19-11-1998 |
| US 6246880 | B1 | 12-06-2001 | AU | 1590300 A | 05-06-2000 |
| | | | CN | 1333984 A | 30-01-2002 |
| | | | EP | 1129590 A1 | 05-09-2001 |
| | | | JP | 2002530957 T | 17-09-2002 |
| | | | WO | 0030385 A1 | 25-05-2000 |
| EP 1317158 | A | 04-06-2003 | JP | 2003224515 A | 08-08-2003 |

EPO FORM P0459

For more details about this annex : see Official Journal of the European Patent Office, No. 12/82